# EUROPÄISCHE PATENTSCHRIFT

(11) **EP 0 570 772 B1**
(45) Veröffentlichungstag und Bekanntmachung des Hinweises auf die Patenterteilung: **28.08.1996**
(21) Anmeldenummer: 93107389.4
(22) Anmeldetag: 06.05.1993
(51) Int. Cl.: H01J 61/36

(54) **Hochdruckentladungslampe**
High pressure discharge lamp
Lampe à décharge à haute pression

(30) Priorität: 18.05.1992 DE 9206727 U
(43) Veröffentlichungstag der Anmeldung: 24.11.1993
(73) Patentinhaber: Patent-Treuhand-Gesellschaft für elektrische Glühlampen mbH, D-81543 München (DE)
(72) Erfinder: Jüngst, Stefan, Dr., W-8011 Zorneding (DE); Bastian, Hartmuth, W-8805 Fechtwangen (DE)

(56) Entgegenhaltungen:
- EP-A- 0 472 100
- DE-A- 1 471 379
- DE-U- 9 112 690

## Beschreibung

Die Erfindung geht aus von einer Hochdruckentladungslampe gemäß dem Oberbegriff des Anspruchs 1.

Es handelt sich dabei entweder um Natriumhochdrucklampen oder um Metallhalogenid-Entladungslampen, deren Farbwiedergabe dadurch verbessert ist, daß ein keramisches Entladungsgefäß benutzt wird, das eine Erhöhung der Betriebstemperatur gegenüber einem Entladungsgefäß aus Quarzglas gestattet. Typische Leistungsstufen sind 100-250 W.

Keramische Entladungsgefäße und dafür entwickelte Einschmelztechniken sind von den Natriumhochdrucklampen her bekannt. Häufig werden rohrförmige Durchführungen aus Niob oder auch Tantal verwendet, die mittels Glaslot in einen keramischen Endstopfen eingeschmolzen sind (GB-PS 1 465 212).

Dies ist gut möglich, weil beide Materialien in etwa den gleichen Ausdehnungskoeffizienten (8x10⁻⁶ K⁻¹) besitzen.

Für Metallhalogenidlampen mit langer Lebensdauer und guter Farbwiedergabe sind diese bekannten Einschmelztechniken jedoch nicht ohne weiteres geeignet, da die Metallhalogenidfüllung sowohl die Niobdurchführung als auch das zur Abdichtung verwendete Glaslot stark korrodiert. Aber auch bei Natriumhochdrucklampen ist die Lebensdauer durch den Angriff des kondensierten Natriums auf die Durchführung eingeschränkt.

Das DE-U 91 12 690 beschreibt eine Metallhalogenidlampe, bei der die Durchführung ein Niobstift ist, der in eine durchgehende Bohrung des keramischen Endstopfens direkt eingesintert ist. Die Bohrung hat einen konstanten Durchmesser. Der äußere Abschnitt des Niobstifts kann von einer Hülse umgeben sein, die vorteilhaft in einen vergrößerten Bohrungsabschnitt eingesetzt und dort mit Glaslot fixiert ist.

Es ist Aufgabe der Erfindung, eine Hochdruckentladungslampe gemäß dem Oberbegriff des Anspruchs 1 mit hoher Lebensdauer bereitzustellen. Eine zusätzliche Aufgabe ist es, Lampen mit verbesserter Farbwiedergabe und erhöhter Lichtausbeute zu schaffen, die die guten Lichtwerte auch über eine akzeptable Lebensdauer beibehalten.

Diese Aufgabe wird durch eine Hochdrucklampe gemäß dem Oberbegriff des Anspruchs 1 mit den kennzeichnenden Merkmalen des Anspruchs 1 gelöst. Besonders vorteilhafte Ausgestaltungen finden sich in den Unteransprüchen.

Bei der Übertragung der bei Natriumdampflampen bekannten Durchführungstechnik auf Keramiklampen mit Metallhalogenidfüllungen müssen gleichzeitig zwei Probleme auf einmal gelöst werden: die Halogenide greifen sowohl das Glaslot als auch die Durchführung an. Letzteres ist deshalb so problematisch, weil nur sehr wenige Metalle einen in etwa an die Keramik angepaßten thermischen Ausdehnungskoeffizienten besitzen, insbesondere Niob und Tantal. Aber gerade diese Metalle werden durch die Halogenide (bzw. durch das Natrium-Kondensat) korrodiert. Sie können daher nur verwendet werden, wenn sie vor dem Angriff der Halogenide (bzw. des Natriumkondensats) wirkungsvoll geschützt werden.

Die vorliegende Erfindung erreicht dies dadurch, daß das Durchführungsrohr in besonderer Weise vertieft im Stopfen eingesetzt ist. Während nämlich der Stand der Technik den Durchmesser der Bohrung über die gesamte Länge des Stopfens konstant beläßt, so daß auch bei einem vertieften Einsetzen des Rohres im Stopfen der Angriff der aggressiven Füllstoffe - zumindest am Ende des Rohrs - relativ leicht möglich ist, wird dieser Angriff bei der vorliegenden Erfindung dadurch minimiert, daß die Bohrung aus zwei Abschnitten mit unterschiedlichem Durchmesser besteht, die stufenförmig aneinander anschließen. Dabei weist die Bohrung entladungsseitig einen verengten Abschnitt auf, dessen Durchmesser kleiner als der Durchmesser des im weiteren Abschnitt angeordneten Durchführungsrohres ist. Auf diese Weise wird vor allem das der Entladung zugewandte Ende des Rohrs besser gegen den Angriff der Füllstoffe geschützt. Außerdem bildet die Stufe für das Rohr einen Anschlag, der automatisch den Elektrodenabstand festlegt. Die Abmessungen sind so gewählt, daß der Durchmesser des weiteren Bohrungsabschnitts dem Durchmesser des Rohres angepaßt ist, so daß lediglich eine Kapillare verbleibt, in die das Glaslot eingefüllt werden kann. Umgekehrt wird der Durchmesser des verengten Abschnitts so gewählt, daß die innere Zuleitung, die im allgemeinen als Elektrodenschaft ausgebildet ist - und eventuell eine an deren Spitze angebrachte Wendel oder kugelförmige Verdickung - gerade noch hindurchgeführt werden kann. Ein besonders kleiner Durchmesser des verengten Abschnitts läßt sich dadurch erzielen, daß man beim Einführen des Elektrodensystems zunächst auf jegliche Verdickung am entladungsseitigen Ende des Elektrodenschafts verzichtet und dieses Ende erst nachträglich in der fertigen Lampe verkugelt. Dies geschieht z.B. durch Anlegen eines Überstroms. Dabei ist jedoch darauf zu achten, daß der Durchmesser des verengten Abschnitts trotzdem merklich größer als der Durchmesser der inneren Zuleitung bzw. des Elektrodenschafts bleibt, so daß eine Kapillarwirkung im Bereich des verengten Abschnitts vermieden wird. Dies ist deshalb notwendig, weil der Elektrodenschaft üblicherweise aus besonders hochschmelzendem Metall (meist Wolfram) gefertigt ist, dessen thermischer Ausdehnungskoeffizient erheblich von dem des keramischen Stopfenmaterials abweicht. Das Glaslot würde im Fall einer Kapillarwirkung im Bereich des verengten Abschnitts auch den Elektrodenschaft benetzen, jedoch würden sich bald wegen der nicht angepaßten Ausdehnungskoeffizienten bei der hohen thermischen Belastung der Lampe durch Ein- und Ausschalten Sprünge und Risse im Glaslot und letztlich auch im Stopfen bilden, die zur Undichtigkeit führen würden.

Der Durchmesser des Rohres sollte auf weniger als 50 µm dem Durchmesser des ersten, weiteren (nicht verengten) Abschnitts der Bohrung angepaßt sein, um dort die Kapillarwirkung hervorzurufen. Um die Kapillarwirkung im Bereich des verengten Abschnitts zu vermeiden, sollte dort die Fehlanpassung mindestens 500 µm betragen. Die Länge der eigentlichen Bohrung beträgt vorteilhaft etwa zwei Drittel der Höhe des Stopfens, um zum einen einen sicheren Sitz und eine genügend lange Abdichtungsstrecke für das Rohr zu erzielen und zum anderen das Rohr noch genügend tief im Stopfen versenken zu können.

Bei einer besonders bevorzugten Ausführungsform ist das entladungsseitige Ende des Durchführungsrohrs durch eine halbkugelartige Rundung verschlossen. Der Elektrodenschaft ist darauf stumpf angeschweißt. Das halbkugelig geformte Rohrende wird durch Aufschmelzen eines offenen Rohrendes erzeugt. Gleichzeitig ist der Übergang zwischen dem weiten (ersten, weiteren) Abschnitt und dem verengten Abschnitt so abgerundet, daß er der halbkugelartigen Rundung des Rohres angepaßt ist. Diese Anordnung hat den entscheidenden Vorteil, daß die das Rohr umgebende Kapillare gleichsam bis zum entladungsseitigen Ende des Rohres verlängert ist. Das hat bei der Montage zur Folge, daß das Glaslot beim Erwärmen mit hoher Zuverlässigkeit bis zum Ansatz des Elektrodenschafts fließt. Das Rohr ist also vollständig vom Glaslot ummantelt und dadurch besonders zuverlässig vor dem Angriff der aggressiven Füllstoffe geschützt. Wesentlich dabei ist, daß die konkave Rundung am Übergang vom weiten Abschnitt zum verengten Abschnitt der Bohrung möglichst gut dem halbkugelig geformten Ende des Durchführungsrohrs entspricht.

Als besonders günstig hat es sich dabei herausgestellt, daß besondere Abstandshalter oder Fixierhilfen zur Einhaltung des Kapillarspalts und des Elektrodenabstands nicht benötigt werden. Das Elektrodensystem, bestehend aus Rohr, Elektrodenschaft und Spitze positioniert sich vielmehr selbst, wobei der für das Funktionieren der Lampe erforderliche exakte Elektrodenabstand automatisch eingehalten wird. Die Einhaltung des Kapillarspalts wird durch natürliche Unebenheiten garantiert.

Vorteilhaft wird das Niobrohr vor dem Einschmelzen mit einer 0,1-0,2 mm dicken Al₂O₃-Schicht überzogen, wobei die Bohrung im Stopfen entsprechend vergrößert werden muß. Diese Beschichtung hat zwei Vorteile. Sie schützt das Rohr zusätzlich vor der Füllung, da diese erst durch die Schicht hindurchdiffundieren muß, bevor sie die Wand des Rohres angreifen kann. Auf diese Weise wird die Lebensdauer der Lampe verlängert. Außerdem besitzt die Al₂O₃-Schicht eine poröse Struktur, die die Benetzungsfähigkeit durch das Glaslot verbessert. Indirekt unterstützt die Al₂O₃-Schicht damit das Hineinsaugen des Glaslotes in den Kapillarspalt. Dadurch wird die Zuverlässigkeit der vollständigen und gleichmäßigen Benetzung des Rohres durch das Glaslot verbessert, wodurch der Ausschuß gesenkt wird. Die Beschichtung wird mittels eines Flammspritzverfahrens aufgetragen.

Die Beschichtung kann noch weiter verbessert werden durch Zugabe von Y₂O₃. Dabei wird beispielsweise zunächst eine reine Al₂O₃-Schicht hergestellt und erst anschließend eine zusätzliche Schicht reines Y₂O₃ oder auch Al₂O₃/Y₂O₃ im Verhältnis 1:1 bis 1:3 aufgetragen. Dies wird entweder wieder durch Flammspritzen oder durch Eintauchen des vorbeschichteten Rohres in eine Y₂O₃-Suspension erreicht, wobei das beschichtete Rohr anschließend bei 2000 °C ausgeheizt bzw. eingeschmolzen wird, so daß eine kristalline Schicht mit glasigem Anteil entsteht. Als Beschichtung eignen sich auch andere Metalloxide.

Das Rohr mit den beiden Schichten wird danach bei mindestens 1800 °C unter Schutzgas oder Vakuum für einige Minuten gesintert. Dabei bildet sich ein halogenidresistenter homogener Überzug aus einer Al₂O₃/Y₂O₃-Mischung. Je nach Abkühlbedingungen ist der Mischüberzug entweder mehr glasig und wirkt wie eine Hochtemperatur-Emaille (bei schnellem Abkühlen) oder er ist überwiegend feinkristallin (bei langsamem Abkühlen). Die so vorbehandelten Durchführungsrohre werden in die Stopfenöffnung eingesetzt, ein Glaslotring auf das Rohr aufgesetzt und anschließend der Stopfen mit eingesetztem Elektrodensystem erwärmt, so daß das Glaslot schmilzt und in die Kapillare im Bereich des weiten Abschnitts der Bohrung hineinläuft, wodurch eine gasdichte Einschmelzung erzielt wird.

Als Glaslot können bekannte Metalloxidmischungen verwendet werden. Bei Metallhalogenidlampen muß es sich im Gegensatz zu den Natriumhochdrucklampen um ein halogenidresistentes Glaslot handeln.

Im folgenden soll die Erfindung anhand mehrerer Ausführungsbeispiele näher erläutert werden. Es zeigt
- Figur 1: eine Metallhalogenidentladungslampe, teilweise geschnitten
- Figur 2 und 3: zwei weitere Ausführungsführungsbeispiele des Einschmelzbereichs des Entladungsgefäßes im Schnitt

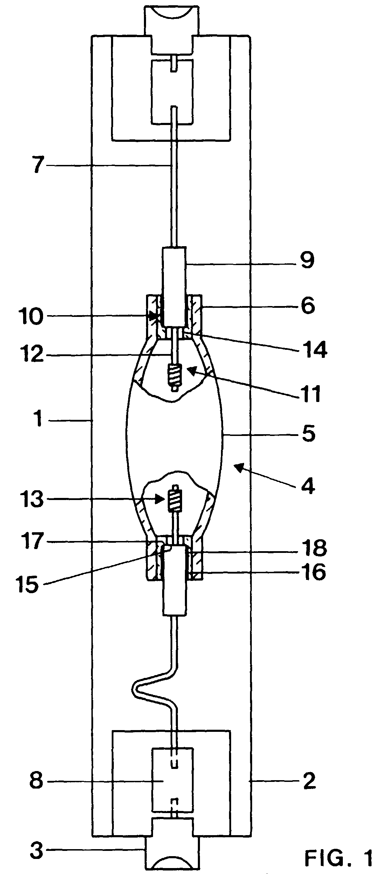

In Figur 1 ist schematisch eine Metallhalogenidentladungslampe mit einer Leistung von 150 W dargestellt. Sie besteht aus einem eine Lampenachse definierenden zylindrischen Außenkolben 1 aus Quarzglas, der zweiseitig gequetscht 2 und gesockelt 3 ist. Das axial angeordnete Entladungsgefäß 4 aus Al₂O₃-Keramik ist in der Mitte 5 ausgebaucht und besitzt zylindrische Enden 6. Es ist mittels zweier Stromzuführungen 7, die mit den Sockelteilen 3 über Folien 8 verbunden sind, im Außenkolben 1 gehaltert. Die Stromzuführungen 7 sind mit rohrförmigen Durchführungen 9 verschweißt, die jeweils in einem keramischen Stopfen 10, ebenfalls aus Al₂O₃, am Ende des EntladungsgefäßeS eingepaßt sind.

Die beiden Durchführungen 9 aus Niob (oder auch Tantal) haltern entladungsseitig jeweils Elektroden 11, bestehend aus einem Elektrodenschaft 12 aus Wolfram und einer am entladungsseitigen Ende aufgeschobenen Wendel 13. Die Füllung des Entladungsgefäßes besteht neben einem inerten Zündgas, z.B. Argon, aus Quecksilber und Zusätzen an Metallhalogeniden. Die rohrförmigen Durchführungen 9, die tiefgezogen oder fließgepreßt sind, sitzen vertieft in einer Bohrung 14 des Endstopfens 10. Sie besitzen am entladungsseitigen Ende einen ebenen Boden 15, an dem der Elektrodenschaft 12 stumpf angeschweißt ist. Die Bohrung 14 besteht aus zwei Abschnitten, von denen der erste 16 dem Durchmesser des Niobrohrs 9 angepaßt ist und der zweite 17 im Vergleich dazu verengt ist. Die beiden Abschnitte sind stufenförmig aneinandergesetzt, wobei der Boden 15 des Rohrs auf der Stufe aufliegt. Der Bohrungsdurchmesser des zweiten Abschnitts 17 ist so weit, daß bei der Montage der Elektrodenschaft 12 einschließlich der Wendel 13 durch die Stopfenbohrung 14 eingeführt werden kann. Das Rohr 9 ist im ersten Abschnitt 16 mittels eines halogenidresistenten Glaslots 18 gasdicht eingeschmolzen. Als Glaslot eignen sich an sich bekannte Materialien, wie z.B. eine Mischung aus Aluminium- und Erdalkalioxiden. Speziell geeignete halogenidresistente Materialien sind z.B. in der EP-A 60 582 und EP-A 230 080 beschrieben.

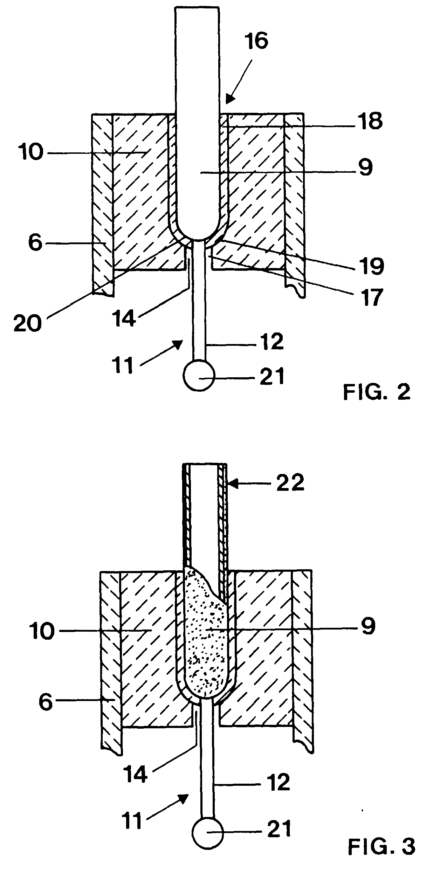

In Figur 2 ist ein besonders bevorzugtes Ausführungsbeispiel erläutert. Der Durchführungsbereich ist an einem Ende des Entladungsgefäßes im Ausschnitt gezeigt. Das Entladungsgefäß hat an seinem Ende 6 eine Wandungsdicke von 1,2 mm. Ein zylindrischer Stopfen 10 ist am Ende 6 eingesetzt. Sein Außendurchmesser beträgt 3,3 mm bei einer Gesamthöhe von 5 mm. Die axiale Bohrung 14 besteht aus einem ersten Abschnitt 16 mit einem Durchmesser von 2,0 mm und einem zweiten verengten Abschnitt 17 mit einem Durchmesser von 0,8 mm. Die Länge des ersten Abschnitts 16 entspricht etwa zwei Dritteln der Höhe des Stopfens 10, das restliche Drittel nimmt der zweite Abschnitt 17 ein. Das Niobrohr 9, das außen am Stopfen 10 übersteht, besitzt einen Außendurchmesser von 1,95 mm, so daß der für das Glaslot 18 verbleibende Spalt eine Breite von 25 µm besitzt. Die Wandstärke des Niobrohrs 9 beträgt 0,2 mm. Der Durchmesser des Elektrodenschafts 12 aus Wolfram ist 0,5 mm.

Der Übergang 19 zwischen dem ersten und zweiten Abschnitt 16 bzw. 17 ist konkav abgerundet. Das entladungsseitige Ende des Rohrs ist ebenfalls durch eine halbkugelige Rundung 20 verschlossen. Die beiden Rundungen 19 und 20 sind einander so angepaßt, daß die Breite des als Kapillare wirkenden Spalts zwischen Rohr und erstem Abschnitt 16 der Bohrung auch im Bereich der Rundungen 19, 20 in etwa erhalten bleibt. Dadurch benetzt das Glaslot 18 nicht nur den Spalt im Bereich des ersten Abschnitts 16, sondern auch das Rohrende 20 bis zum Ansatz des Elektrodenschafts 12.

Um eine möglichst vollständige Benetzung zu gewährleisten, ist der Durchmesser des zweiten Abschnitts 17 so klein gewählt, daß bei der Montage lediglich der Elektrodenschaft durch die Bohrung 14 eingeführt werden kann. Die am Ende des Schaftes ausgebildete kugelförmige Spitze 21 wird erst nachträglich innerhalb des Entladungsgefäßes durch Anlegen eines Überstroms erzeugt.

Eine weitere Verbesserung dieser Ausführungsform ist in Fig. 3 dargestellt. Die Anordnung entspricht im wesentlichen der Fig. 2, wobei gleiche Teile durch gleiche Bezugsziffern bezeichnet sind. Das Niobrohr 9 ist jedoch mit einer 0,2 mm dicken Al₂O₃-Schicht 22 (evtl. mit Y₂O₃-Zusatz) bedeckt. Dementsprechend ist die Stopfenbohrung im Bereich des ersten Abschnitts 16 auf 2,4 mm Durchmesser aufgeweitet. Bei dieser Variante benetzt das Glaslot 18 das Niobrohr 9 besonders gleichmäßig und vollständig.

## Patentansprüche

1. Hochdruckentladungslampe mit einem keramischen Entladungsgefäß (4) aus Aluminiumoxid, das eine ionisierbare Füllung enthält und das zwei Enden (6) besitzt, die durch keramische Stopfen (10) verschlossen sind, wobei zumindest an einem Ende (6) in einer durchgehenden Bohrung (14) des Stopfens als elektrische Durchführung (9) ein Rohr aus Niob oder einem hinsichtlich des thermischen Ausdehnungskoeffizienten niobähnlichen Metall vertieft bezüglich des der Entladung zugewandten Endes des Stopfens eingesetzt ist, das über eine innere Zuleitung mit einer Elektrode (11) im Innern des Entladungsgefäßes und andererseits mit einer äußeren elektrischen Zuleitung (7) verbunden ist, dadurch gekennzeichnet, daß an dem einen Ende der Durchführungsbereich folgende Merkmale aufweist:
- die Bohrung des Stopfens (10) besteht aus zwei Abschnitten (16, 17) mit unterschiedlichem Durchmesser
- der erste Abschnitt (16) ist der Entladung abgewandt und umgibt zumindest einen Teil des Rohres (9), wobei der Durchmesser des ersten Abschnitts (16) dem Außendurchmesser des Rohres (9) so angepaßt ist, daß eine Kapillare verbleibt,
- der zweite Abschnitt (17), der gegenüber dem ersten Abschnitt (16) verengt ist, ist der Entladung zugewandt und umgibt zumindest einen Teil der inneren Zuleitung (12), wobei der Durchmesser des zweiten Abschnitts (17) dem Durchmesser der inneren Zuleitung (12) nicht angepaßt ist, indem der Durchmesser des zweiten Abschnitts der Bohrung des Stopfens kleiner als der Außendurchmesser des Rohres ist,
- das Rohr (9) ist im ersten Abschnitt (16) mittels Glaslot (18) gasdicht eingeschmolzen.

2. Hochdruckentladungslampe nach Anspruch 1, dadurch gekennzeichnet, daß die Länge des ersten Abschnitts (16) der Bohrung etwa zwei Dritteln der Höhe des Stopfens (10) entspricht.

3. Hochdruckentladungslampe nach Anspruch 1, dadurch gekennzeichnet, daß der Durchmesser des ersten Abschnitts (16) und der Außendurchmesser des Durchführungsrohrs (9) um höchstens 50 µm differieren.

4. Hochdruckentladungslampe nach Anspruch 1, dadurch gekennzeichnet, daß der Durchmesser des zweiten Abschnitts (17) und der Durchmesser der inneren Zuleitung (12) um mindestens 500 µm differieren.

5. Hochdruckentladungslampe nach Anspruch 1, dadurch gekennzeichnet, daß das entladungsseitige Ende des Rohrs durch eine halbkugelartige Rundung (20) verschlossen ist, und daß der Übergang zwischen dem ersten (16) und zweiten Abschnitt (17) der Bohrung so abgerundet (19) ist, daß er der halbkugelartigen Rundung (20) des Rohrs angepaßt ist.

6. Hochdruckentladungslampe nach Anspruch 1, dadurch gekennzeichnet, daß auf das Rohr eine Al₂O₃-Schicht (22) aufgetragen ist.

7. Hochdruckentladungslampe nach Anspruch 6, dadurch gekennzeichnet, daß die Schicht (22) zusätzlich Y₂O₃ enthält.

8. Hochdruckentladungslampe nach Anspruch 1, dadurch gekennzeichnet, daß beide Durchführungen (9) auf die gleiche Weise in ihren Stopfen (10) befestigt sind.

## Claims

1. High-pressure discharge lamp having a ceramic discharge vessel (4) of aluminium oxide, which vessel contains an ionizable fill and has two ends (6) that are closed off by ceramic plugs (10), at least at one end (6) a tube of niobium or a metal which is similar to niobium as regards the coefficient of thermal expansion, being fitted as the electrical lead-through (9) in a through-opening (14) of the plug, in such a way that it is set back relative to the end of the plug adjacent to the discharge, which tube is connected via an inner current supply lead to an electrode (11) in the interior of the discharge vessel and is additionally connected to an outer electrical current supply lead (7), characterized in that, at the one end, the lead-through region has the following features:
- the opening in the plug (10) consists of two portions (16, 17) of different diameter,
- the first portion (16) is remote from the discharge and encloses at least one part of the tube (9), the diameter of the first portion (16) being matched to the external diameter of the tube (9) in such a way that a capillary remains,
- the second portion (17), which is narrower than the first portion (16), is adjacent to the discharge and encloses at least one part of the inner current supply lead (12), the diameter of the second portion (17) not being matched to the diameter of the inner current supply lead (12), while the diameter of the second portion of the opening in the plug is smaller than the external diameter of the tube,
- the tube (9) is melt-sealed in the first portion (16) by means of a sealing glass (18).

2. High-pressure discharge lamp according to Claim 1, characterized in that the length of the first portion (16) of the opening corresponds to approximately two thirds of the height of the plug (10).

3. High-pressure discharge lamp according to Claim 1, characterized in that the diameter of the first portion (16) and the external diameter of the lead-through tube (9) differ by at most 50 µm.

4. High-pressure discharge lamp according to Claim 1, characterized in that the diameter of the second portion (17) and the diameter of the inner supply lead (12) differ by at least 500 µm.

5. High-pressure discharge lamp according to Claim 1, characterized in that the discharge-side end of the tube is closed off by a hemispherical rounding (20), and in that the transition between the first (16) and second (17) portions of the opening is rounded off (19) in such a way that it is matched to the hemispherical rounding (20) of the tube.

6. High-pressure discharge lamp according to Claim 1, characterized in that an Al₂O₃-layer (22) is applied onto the tube.

7. High-pressure discharge lamp according to Claim 6, characterized in that the layer (22) additionally contains Y₂O₃.

8. High-pressure discharge lamp according to Claim 1, characterized in that both lead-throughs (9) are fastened in their plugs (10) in the same way.

## Revendications

1. Lampe à décharge haute pression comportant une enceinte céramique de décharge (4) en oxyde d'aluminium, qui contient une atmosphère ionisable et qui comporte deux extrémités (6), qui sont fermées par des bouchons céramiques (6), un tube en niobium ou en un métal ayant un coefficient de dilatation thermique semblable à celui du niobium étant inséré, au moins à une extrémité (6), dans un trou de passage (14) du bouchon, en tant que traversée électrique (9), en renfoncement par rapport à l'extrémité du bouchon tournée du côté de la décharge, ce tube étant relié par l'intermédiaire d'un conducteur intérieur d'alimentation à une électrode (11) à l'intérieur de l'enceinte de décharge et de l'autre côté à un conducteur extérieur d'alimentation électrique (7), caractérisée par le fait que sur l'une des extrémités, la zone de passage présente les particularités suivantes :
- le trou du bouchon (10) est en deux parties (16,17) de diamètres différents,
- la première partie (16) est éloignée de la décharge et entoure au moins une partie du tube (9), le diamètre de la première partie (16) étant adapté au diamètre extérieur du tube (9) de sorte qu'il subsiste un tube capillaire,
- la seconde partie (17), qui est rétrécie par rapport à la première partie (16), est tournée vers la décharge et entoure au moins une partie du conducteur intérieur d'alimentation (12), le diamètre de la seconde partie (17) n'étant pas adapté au diamètre du conducteur intérieur d'alimentation (12), par le fait que le diamètre de la seconde partie du trou du bouchon est inférieur au diamètre extérieur du tube,
- le tube (9) est scellé, d'une manière étanche aux gaz, dans la première partie (16) au moyen d'un verre de brasage (18).

2. Lampe à décharge haute pression suivant la revendication 1, caractérisée par le fait que la longueur de la première partie (16) du trou correspond approximativement aux deux tiers de la hauteur du bouchon (10).

3. Lampe à décharge haute pression suivant la revendication 1, caractérisée par le fait que le diamètre de la première partie (16) et le diamètre extérieur du tube de traversée (9) diffèrent au maximum de 50 µm.

4. Lampe à décharge haute pression suivant la revendication 1, caractérisée par le fait que le diamètre de la seconde partie (17) et le diamètre du conducteur intérieur d'alimentation (12) diffèrent au moins de 500 µm.

5. Lampe à décharge haute pression suivant la revendication 1, caractérisée par le fait que l'extrémité, située côté décharge, du tube est fermée par un arrondi de forme hémisphérique (20), et que la jonction entre la première partie (16) et la seconde partie (17) du trou est arrondie (19) de manière à être adaptée à l'arrondi de forme hémisphérique (20) du tube.

6. Lampe à décharge haute pression suivant la revendication 1, caractérisée en ce qu'une couche de Al₂O₃ (22) est déposée sur le tube

7. Lampe à décharge haute pression suivant la revendication 6, caractérisée par le fait que la couche (22) contient en outre du Y₂O₃.

8. Lampe à décharge haute pression suivant la revendication 1, caractérisée par le fait que les deux traversées (9) sont fixées de la même manière dans leurs bouchons (10).
